(19) Europäisches Patentamt / European Patent Office / Office européen des brevets

(11) **EP 2 571 675 B1**

(12) **FASCICULE DE BREVET EUROPEEN**

(45) Date de publication et mention de la délivrance du brevet:
**16.09.2015 Bulletin 2015/38**

(21) Numéro de dépôt: **11723383.3**

(22) Date de dépôt: **18.05.2011**

(51) Int Cl.:
***B29D 30/30*** *(2006.01)*

(86) Numéro de dépôt international:
**PCT/EP2011/058065**

(87) Numéro de publication internationale:
**WO 2011/144665 (24.11.2011 Gazette 2011/47)**

(54) **DISPOSITIF D'AJUSTEMENT D'UN FRONT DE NAPPE**

VORRICHTUNG ZUR ANPASSUNG DER VORDEREN SEITE EINER SCHICHT

DEVICE FOR ADJUSTING THE FRONT OF A LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2010 FR 1053972**

(43) Date de publication de la demande:
**27.03.2013 Bulletin 2013/13**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **RAVAT, Stéphane**
**F-63040 Clermont-Ferrand Cedex 9 (FR)**
• **DUCROS, Thierry**
**F-63040 Clermont-Ferrand Cedex 9 (FR)**
• **DEBOEUF, Michel**
**F-63040 Clermont-Ferrand Cedex 9 (FR)**

(74) Mandataire: **Reynaud, Georges et al**
**Manufacture Française**
**des Pneumatiques Michelin**
**23, place des Carmes-Dechaux**
**SGD/LG/PI-F35-Ladoux**
**63040 Clermont-Ferrand Cedex 9 (FR)**

(56) Documents cités:
WO-A1-2010/020398    DE-A1-102008 021 042
US-A- 4 465 531    US-A- 4 769 104
US-A- 5 904 788

**Description**

L'objet de la présente invention concerne le domaine de la fabrication des nappes de renfort destinées à l'assemblage des pneumatiques.

Ces nappes de renfort sont composées usuellement de tronçons de fils de renfort, enrobés dans du caoutchouc, parallèles entre eux, et formant un angle donné avec la direction longitudinale de la nappe de renfort.

La fabrication des nappes de renfort elles mêmes se fait usuellement à partir d'une nappe de grande largeur, communément dénommée nappe droit fil, dans laquelle les fils de renfort sont parallèles à la direction longitudinale de la nappe. A cet effet, à l'aide d'une cisaille à angle, on prélève des tronçons d'une largeur donnée dans la nappe droit fil et on assemble ces tronçons les uns avec les autres de manière à constituer une bande continue dont les fils sont orientés par rapport à la direction longitudinale.

L'étape d'assemblage consiste, de manière connue à disposer des profilés ou des nappes de renfort sur une surface de réception de forme généralement cylindrique, ou parfois toroïdale, en rotation autour de son axe généralement disposé à l'horizontale.

Les nappes de renfort, qui se présentent sous la forme d'une bande continue dont on prélève un tronçon de longueur donnée, servent à constituer la ceinture de renfort sommet ou la nappe de renfort carcasse. Ces tronçons mis à longueur sont encore connus sous la dénomination de nappes.

On s'arrange alors pour que la longueur de la nappe soit sensiblement égale à la circonférence de la surface de réception de manière à ce que, après avoir enroulé la nappe de manière connue autour de la surface de réception, le front avant et le front arrière de la nappe soient disposés bout à bout et distants l'un de l'autre d'une valeur minimale comprise entre une tolérance maximale et une tolérance minimale.

On observe toutefois que la géométrie des fronts de nappe n'est pas toujours rectiligne, et que l'ajustement des deux fronts peut s'avérer problématique si des mesures de compensation ne sont pas prises en amont du dispositif d'assemblage. Ces difficultés tiennent à la nature même du produit, qui présente une forte tendance à faire varier sa longueur et/ou l'angle des fils sous l'action d'une contrainte transversale ou longitudinale.

De plus, la libération des contraintes après la coupe de la nappe a tendance à déformer le front de la nappe en courbant les fils de manière aléatoire particulièrement dans la zone de la pointe.

Pour résoudre cette difficulté, de nombreux dispositifs ont été proposés par les fabricants de machine d'assemblage.

Ainsi, la publication US 4 769 104 propose un procédé comportant un ensemble de bras mobiles permettant d'aligner et de mettre en forme le front d'une nappe préalablement déposée sur un tapis magnétique. La forme nécessairement rectiligne des bras ne permet pas de corriger des fronts de nappes courbés. De plus, l'action successive des bras tend à modifier l'alignement précédemment réalisé de la lisière au moment de l'alignement du front, provoquant un décalage au niveau du rapprochement des deux extrémités de la nappe une fois déposée sur la forme.

La publication EP 0 649 730 fait état d'un procédé dans lequel la forme de la nappe est analysée par des caméras. Par comparaison avec une forme théorique prédéterminée, un automatisme détermine les déplacements transversaux à réaliser au moment de la dépose de la laize depuis un tapis de déroulage vers un tapis magnétique. Ce système s'avère néanmoins peu performant pour corriger avec précision les écarts angulaires du front de nappe par rapport à une valeur pré établie.

La publication US 4 857 123 décrit un procédé dans lequel la géométrie du front de nappe est évaluée en mesurant l'écart entre les positions successives d'un couteau flottant mobile dans le sens perpendiculaire au front de coupe, et une ligne de coupe théorique prédéterminée. La correction angulaire est effectuée par un manipulateur saisissant le front de nappe et effectuant une rotation contrôlée autour d'un axe perpendiculaire au plan de la nappe et passant sensiblement par le centre du front, faisant subir une correction angulaire identique à la pointe et au talon de la nappe. La publication US 5 092 946 améliore ce dernier procédé en proposant de déposer la nappe sur une succession de tapis magnétiques permettant de maintenir en position le front de nappe à chaque étape du cycle de pose.

Enfin, la publication EP 1 447 210 propose de mesurer le passage des fronts de nappe avant et arrière au dessus de cellules de détection de manière à évaluer la géométrie des fronts et la longueur de nappe entre les points de mesure. Des ensembles de préhension permettent de saisir le front de nappe et de corriger les déformations de l'angle de la nappe au moment de la dépose de la nappe sur le tambour d'assemblage.

Aussi les publications US 4465531, WO 2010/020398, DE 102008021042 et US 5904788 proposent des dispositifs et des procédés différents pour la correction des dimensions et de la position de nappes pendant leur déposition sur une surface de réception.

Tous ces dispositifs font appel à des moyens de détection et de correction des fronts de nappe relativement élaborés, et dont l'usage est recommandé dans le cas de nappes présentant de fortes déformations des fronts.

Il est également connu d'ajuster la longueur de la nappe déposée sur la surface de réception de manière à ajuster la longueur posée en fonction de l'écart entre la circonférence de la surface de réception et la longueur de la nappe mesurée entre le front avant et le front arrière.

L'objet de la présente invention est de proposer un perfectionnement du procédé et du dispositif de mesure et de pose évoqué au paragraphe précédent, qui est relativement simple, et qui peut se révéler avantageux lorsque les fronts des nappes de renfort sont peu perturbés, lors de la coupe et de la mise à longueur des nappes.

Le procédé de pose selon l'invention est destiné à la pose d'une nappe de renfort formant la ceinture de renfort d'un pneumatique sur une surface de réception de forme généralement cylindrique. Ladite nappe comprend une front avant et un front arrière destinés, après une rotation complète de la surface de réception à être disposés bout à bout entre une tolérance maximale et une tolérance minimale.

Ce procédé comme défini dans la revendicaation 1, comprend les étapes au cours desquelles :

- on réalise une nappe de longueur donnée,
- on détermine la longueur séparant le front avant du front arrière sur une ligne de mesure centrale, et sur au moins deux lignes de mesure latérales disposées transversalement de part et d'autre de la ligne de mesure centrale,
- on dépose ladite nappe sur un tapis de lancement,
- on détermine la correction de longueur à effectuer au niveau de la ligne de mesure centrale pour que les deux points d'un front de la nappe correspondants aux longueurs mesurées dont les valeurs sont les plus éloignées l'une de l'autre, soient placés à équidistance de la ligne de référence médiane située à une distance (Tc) du front de référence et correspondant à la valeur moyenne de la tolérance maximale et de la tolérance minimale.
- on amène le front avant de la nappe sur la surface de réception,
- on dépose le reste de la nappe en ajustant le déplacement longitudinal du tapis de lancement par rapport au déplacement circonférentiel de la surface de réception de sorte que la longueur posée au niveau de la ligne centrale soit égale à la longueur mesurée au niveau de ladite ligne de mesure centrale corrigée de ladite correction de longueur.

Le dispositif selon l'invention comme défini dans la revendication 7, comprend

- des moyens de réalisation d'une nappe de renfort,
- un bâti supportant une surface de réception rotative de forme cylindrique
- un tapis de lancement disposé entre les moyens de réalisation de la nappe et la surface de réception
- un capteur central disposé au niveau de la ligne centrale du tapis de lancement et au moins deux capteurs latéraux disposés latéralement de part et d'autre du capteur central et aptes à détecter le passage d'un front de nappe,
- des moyens de calcul adaptés pour

  ∘ déterminer la longueur entre le front avant et le font arrière sur des lignes de mesure disposées au droit des capteurs,
  ∘ déterminer une valeur de correction selon le procédé de l'invention,
  ∘ piloter les déplacements respectifs de l'avance du tapis de lancement et de la rotation de la surface de réception en fonction de ladite valeur de correction. Des formes préférentielles de l'invention sont définies dans les revendications dépendantes.

La description qui suit s'appuie sur les figures 1 à 10 dans lesquelles :

- les figures 1 et 2 représentent un schéma de la méthode connue de correction de la longueur,
- les figures 3 et 4 représentent un schéma explicatif de la méthode selon l'invention,
- la figure 5 représente un schéma simplifié d'un dispositif selon l'invention,
- les figures 6 à 10 représentent les différentes étapes de la pose d'une nappe de renfort à l'aide d'un dispositif selon l'invention.

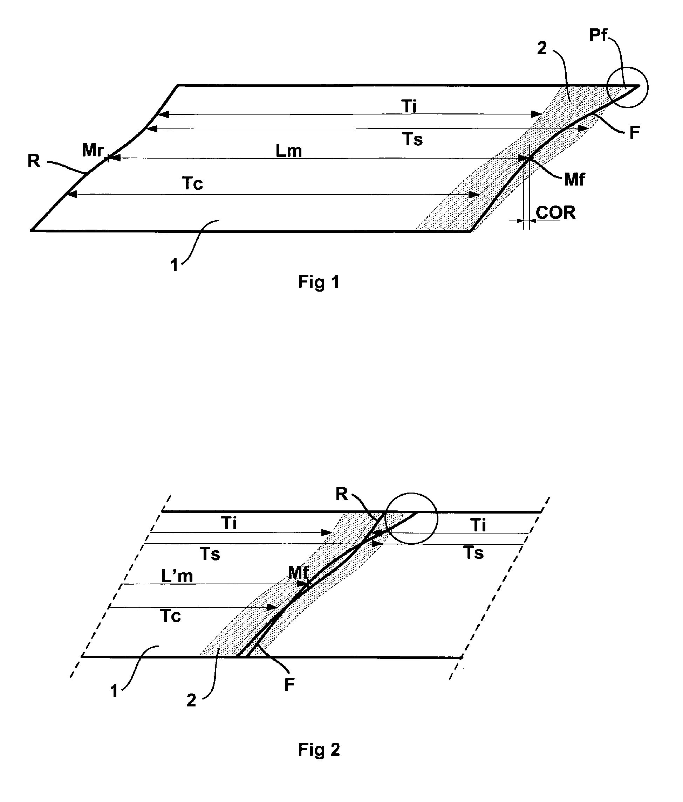

Les figures 1 et 2 décrivent une configuration connue dans laquelle on effectue la seule mesure de la longueur de la nappe 1 en son centre. La longueur Lm correspond à la distance entre les points Mr et Mf qui sont les intersections de la ligne longitudinale centrale avec le front arrière R et avec le front avant F.

L'évaluation de la longueur Lm peut se faire selon des moyens connus en disposant des moyens de détection du passage du front de nappe sur la partie centrale du tapis de lancement et aptes à détecter successivement le passage du front avant puis du front arrière. Ces moyens peuvent comprendre une cellule photoélectrique ou encore un laser.

Lors de la pose de la nappe sur une surface de réception de forme cylindrique, on place la nappe sur un tapis de lancement. On dépose ensuite le font avant F sur la surface de réception puis on enroule la nappe jusqu'à la dépose du front arrière.

Comme cela a été évoqué plus haut, on observe fréquemment que la longueur Lm diffère de la circonférence de pose, quelles que soient les précautions qui sont prises pour ajuster la longueur de la nappe lors de sa réalisation.

Il s'en suit que le front avant et le front arrière ne s'aboutent pas de manière parfaite.

A cet effet on définit des tolérances de pose qui déterminent une zone de tolérance 2 dans laquelle on considérera que l'aboutage est correct lorsque le front avant et le front arrière sont simultanément contenus dans cette zone. La zone de tolérance 2 se définit par la surface comprise entre deux lignes homothétiques d'un front de référence, disposées respectivement à une distance Ti dudit front de référence, Ti correspondant à la tolérance inférieure, et à une distance Ts du front de référence, Ts correspondant à la tolérance supérieure. Les valeurs de Ts et de Ti peuvent être définie également comme étant la valeur de la circonférence de pose +/- une tolérance inférieure ti et une tolérance supérieure ts.

On fera observer que le front de référence peut indistinctement être le front arrière, comme c'est le cas dans les schémas et les explications qui suivent, ou le front avant.

Aussi, de manière connue, pendant la pose de la nappe, on ajuste les déplacements respectifs du tapis de lancement par rapport aux déplacements en rotation de la surface de réception pour augmenter les chances que les deux fonts avant et arrière se trouvent dans ladite zone de tolérance. A cet effet, on détermine le rapport entre le déplacement du tapis de lancement et la rotation de la surface de réception.

Dans le cas illustré aux figures 1 et 2, on s'arrange alors pour que le point du front avant Mf soit placé sur une ligne médiane entre la tolérance supérieure et la tolérance inférieure et située à une distance Tc du front de référence. La valeur de Tc correspond à la moitié de la somme de la tolérance inférieure et de la tolérance supérieure soit $Tc = \frac{1}{2}(Ti + Ts)$.

Pour ce faire, on calcule une valeur de correction de la valeur à poser au centre qui est égale à $COR = \frac{1}{2}(Ts + Ti) - Lm$. La valeur de cette correction permet alors de calculer le rapport entre le déplacement du tapis et le déplacement de la surface de réception comme l'illustre la figure 1.

On observe toutefois que cette méthode, qui s'applique sans réserves lorsque la forme géométrique des fronts avant et arrière est la même, présente parfois des inconvénients lorsque ces formes géométriques diffèrent fortement, comme cela est illustré sur les figures 1 et 2. On observe en effet que l'application de la méthode ci-dessus ne permet pas de ramener la pointe avant Pf dans la zone de tolérance 2 comme cela est mis en évidence à la figure 2.

La mise en ouvre des moyens de correction de front connus de l'état de la technique pourraient utilement être mis en oeuvre pour corriger cette situation. Leur implantation sur des machines existantes nécessite toutefois d'entreprendre de lourdes modifications.

La méthode selon l'invention a pour but de proposer une solution plus légère, qui permet de réaliser les aboutages des nappes dans la zone de tolérance avec une meilleure probabilité de succès que dans la méthode connue de l'état de la technique décrite ci-dessus.

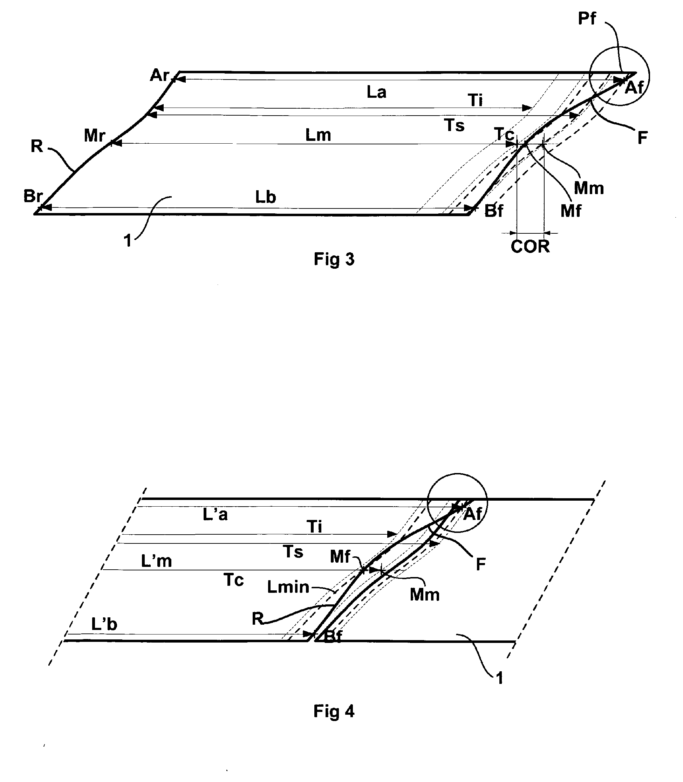

Cette méthode est détaillée ci-après en se référant aux figures 3 et 4. Dans la méthode selon l'invention, il est proposé de mesurer la longueur Lm de la nappe en son centre comme précédemment, mais également sur deux autres lignes de mesure La et Lb situées latéralement de part et d'autre de la ligne centrale. De préférence, les lignes de mesure latérales sont placées à proximité des lisères longitudinales de la nappe, idéalement à une distance comprise entre 10 mm et 40 mm des lisières longitudinales de la nappe.

La longueur La correspond à la longueur entre les points Ar et Af situés respectivement sur le front arrière R et le front avant F, la longueur Lm correspond à la longueur entre les points Mr et Mf situés respectivement sur le front arrière R et le front avant F, et la longueur Lb correspond à la longueur entre les points Br et Bf situés respectivement sur le front arrière R et le front avant F. Dans l'exemple illustré par les figures 3 et 4 le front de référence correspond au front arrière.

On détermine une longueur maximale Lmax correspondant au maximum des longueurs La, Lb et Lm, et une longueur minimale Lmin, correspondant au minimum des longueurs La, Lb et Lm. Dans l'exemple faisant l'objet de la présente description Lmin est égal à Lm et Lmax est égal à La.

On fera observer qu'il peut paraître judicieux d'augmenter le nombre de points de mesure des fronts de nappe de manière à acquérir une connaissance plus parfaite de la géométrie des fronts de nappe. En pratique, il s'avère que la mesure de ces longueurs en trois points seulement est largement suffisante, en raison de la forme relativement standard des fronts avant et arrière.

On détermine ensuite les lignes homothétiques au front de référence passant par les points du front opposé correspondant aux points de mesure des longueurs Lmin et Lmax. Dans l'exemple servant de support à la description de l'invention ces lignes passent par les points Mf et Af.

On détermine la ligne médiane à ces deux lignes, homothétique au front de référence dont elle est distante de la valeur $\frac{1}{2}(Lmin + Lmax)$.

L'intersection de la ligne de mesure centrale avec cette ligne médiane des valeurs minimales et maximales, se fait au point Mm, comme cela est illustré à la figure 3.

On détermine enfin la valeur de la correction COR à réaliser pour ramener le point Mm sur la ligne médiane des tolérances Tc, qui est la ligne homothétique du front de référence située à une distance $\frac{1}{2}(Ts + Ti)$, comme cela est illustré à la figure 4 représentant les positions respectives des fronts avant F et arrière R une fois la nappe posée sur la surface de référence.

La valeur de correction à effectuer COR est donc égale à la moitié de la somme des valeurs de la tolérance supérieure et de la tolérance inférieure, $\dfrac{Ts + Ti}{2}$, diminuée de la moitié de la somme de la longueur supérieure et de la longueur inférieure, $\dfrac{L\max + L\min}{2}$.

Dans le cas exposé ci-dessus :

$$\mathrm{COR} = \frac{Ts + Ti}{2} - \frac{L\max + L\min}{2} = \frac{Ts + Ti}{2} - \frac{La + Lm}{2}.$$

Le rapport de l'avance entre le tapis de lancement et la circonférence de la surface de réception, déterminé au centre de la nappe, est égal à k = Lm/(Lm + COR).

Les longueurs posées sur les différentes lignes de mesure égales successivement à L'a, L'm et L'b, sont le produit des longueurs La, Lm et Lb par le rapport k.

On observera que la valeur de cette correction peut être négative ou positive. Lorsque cette valeur est positive, ce qui est le cas dans l'exemple donné, cela conduit à avoir un rapport entre la vitesse de déroulement du tapis de lancement et la vitesse circonférentielle de la surface de lancement inférieur à 1, et à avoir une vitesse du tapis de lancement supérieure à la vitesse circonférentielle de la surface de réception. Cette situation peut présenter des difficultés de mise en oeuvre, en ce que cela revient à mettre la nappe de renfort en compression.

Aussi, on s'arrange pour que la valeur de la correction COR soit de manière statistique généralement positive, et on réalise une nappe de renfort à une longueur théorique légèrement inférieure à la longueur de la circonférence de la surface de réception de sorte que, lors de la pose, le rapport entre la vitesse de déroulement du tapis de lancement et la vitesse circonférentielle de la surface de réception soit supérieur à 1, ce qui revient à avoir une vitesse du tapis de lancement inférieure à la vitesse circonférentielle de la surface de réception, et à poser la nappe en tension.

En situant le point Mm sur la valeur centrale de la tolérance de pose, on maximise ainsi les chances de disposer l'ensemble des points du front opposé au front de référence dans l'intervalle de tolérance en considérant que l'ensemble des points des fronts de nappe sont situés entre les valeurs maximale et minimales.

On observe du reste que la pointe de la nappe Pf, qui, dans le cas de la méthode selon l'art antérieur connu exposé ci-dessus restait en dehors de l'intervalle de tolérance, est ramenée dans cet intervalle en appliquant la méthode selon l'invention.

Il est également possible de déterminer, juste avant la pose, les cas pour lesquels il devient impossible de respecter cette règle, et qui correspondent aux cas pour lesquels la valeur de la différence entre la longueur maximale et la longueur minimale est supérieure à la valeur de la différence entre la tolérance maximale et la tolérance minimale ; soit : (Lmax - Lmin) > (Ts - Ti). Dans ce cas de figure, il est possible de générer une alerte pour indiquer que le système nécessite l'intervention d'un opérateur.

Dans l'exemple ayant servi de support à la présente description on a considéré le front arrière R comme front de référence, mais il est tout a fait possible de faire un raisonnement similaire conduisant à une valeur de la correction identique en prenant comme référence le front avant F.

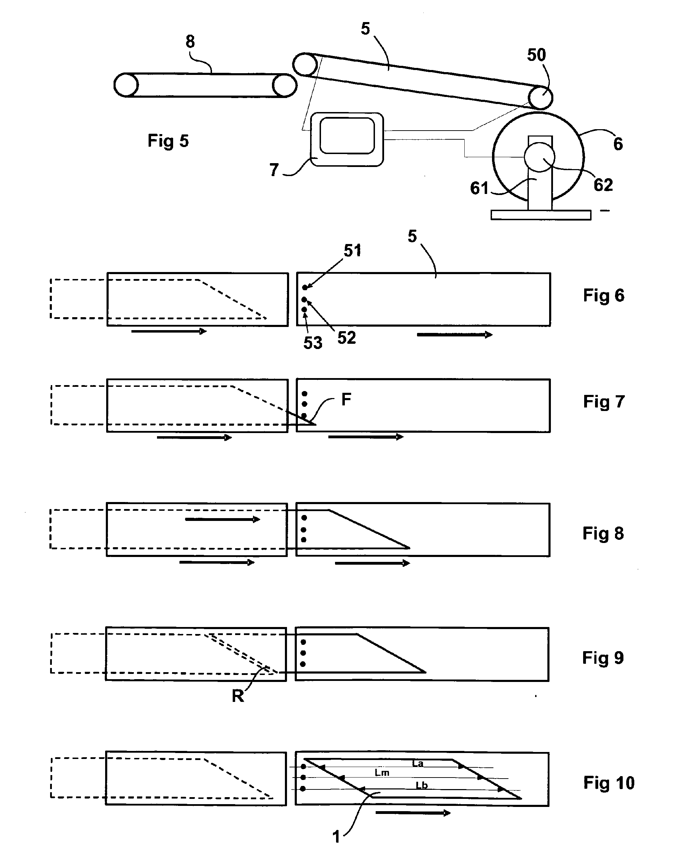

Les figures 5, et 6 à 10 décrivent un dispositif conforme à l'invention, et apte à mettre en oeuvre la méthode selon l'invention telle que décrite ci-dessus.

Ce dispositif de pose comprend des moyens de réalisation d'une nappe de renfort, 8, représentés ici par un dispositif de coupe apte à détacher des tronçons de nappe d'une bande continue formée de fils juxtaposés et faisant un angle avec la direction longitudinale de la nappe.

La surface de réception 6, de forme généralement cylindrique, est supportée par un bâti 61 portant un moyen de motorisation 62, apte à mettre ladite surface en rotation autour de son axe.

Un tapis de lancement 5 est disposé entre les moyens de réalisation de la nappe et la surface de réception. L'avance de ce tapis est commandée par un moteur 50. De préférence ce tapis comporte des moyens aptes à plaquer la nappe de renfort sur la surface du tapis de manière à éviter tout glissement de la nappe lors de la pose. De manière connue, ces moyens peuvent être constitués par des éléments magnétiques, lorsque la nappe de renfort est formée de fils de renfort métalliques.

Le tapis de lancement comporte un capteur central 52 disposé au niveau de la ligne centrale du tapis de lancement, et au moins deux capteurs latéraux 51 et 53 disposés latéralement de part et d'autre du capteur central et aptes à détecter le passage d'un front de nappe au droit de chacun des dits capteurs. Ces capteurs, situés en entrée du tapis de lancement détectent le passage du front de nappe lorsque la nappe est amenée depuis le dispositif de réalisation de la nappe sur le tapis de lancement.

Le dispositif comporte enfin des moyens de calcul adaptés pour :

∘ déterminer la longueur entre le front avant et le font arrière sur des lignes de mesure disposées au droit des capteurs,
∘ déterminer une valeur de correction COR selon la méthode exposée ci-dessus,
∘ piloter les déplacements respectifs de l'avance du tapis de lancement et de la rotation de la surface de réception en fonction de ladite valeur de correction en agissant sur les moteurs 50 et 62.

Les figures 6 à 10 permettent de décomposer la séquence de détermination des longueurs La, Lm et Lb en détectant successivement le passage du front avant F et du front arrière R au-dessus de la ligne de capteurs 51, 52, 53 située en entrée du tapis de lancement.

## Revendications

1. Procédé de pose d'une nappe de renfort sur une surface de réception (6) de forme généralement cylindrique, ladite nappe comprenant une front avant (F) et un front arrière (R) qui, après une rotation complète de la surface de réception (6) sont destinés à être disposés bout à bout entre une tolérance maximale (Ts et une tolérance minimale (Ti) mesurées par rapport à un font de référence, au cours duquel :

   - on réalise une nappe d'une longueur théorique donnée,
   - on détermine la longueur séparant le front avant du front arrière sur une ligne de mesure centrale (Lm), et sur au moins deux lignes de mesure latérales (La, Lb) disposées transversalement de part et d'autre de la ligne de mesure centrale,
   - on dépose ladite nappe sur un tapis de lancement (5),
   - on détermine la correction de longueur à effectuer (COR) au niveau de la ligne de mesure centrale pour que les deux points d'un front (F) de la nappe correspondants aux longueurs mesurées dont les valeurs sont les plus éloignées l'une de l'autre (Lmax, Lmin,) soient placés à équidistance de la ligne de référence médiane située à une distance (Tc) du front de référence correspondant à la valeur moyenne de la tolérance maximale et de la tolérance minimale.
   - on amène le front avant de la nappe sur la surface de réception (6),
   - on dépose le reste de la nappe en ajustant le rapport du déplacement longitudinal du tapis de lancement (5) par rapport au déplacement circonférentiel de la surface de réception (6) de sorte que la longueur posée au niveau de la ligne centrale soit égale à la longueur mesurée au niveau de ladite ligne de mesure centrale (Lm) corrigée de ladite correction de longueur (COR).

2. Procédé selon la revendication 1 dans lequel la valeur de la correction à effectuer (COR) est égale à la moitié de la somme des valeurs de la tolérance supérieure et de la tolérance inférieure ($\frac{Ts+Ti}{2}$) diminuée de la moitié de la somme de la longueur supérieure et de la longueur inférieure ($\frac{L\max+L\min}{2}$).

3. Procédé selon la revendication 1 ou 2 dans lequel on choisi le front avant (F) comme front de référence.

4. Procédé selon la revendication 1 ou 2 dans lequel on choisi le front arrière (R) comme front de référence.

5. Procédé selon l'une des revendications 1 à 4 dans lequel, on réalise une nappe dont la longueur au niveau de la ligne de mesure centrale (Lm) est en moyenne inférieure d'un écart donné à la circonférence de la surface de pose de sorte que la valeur de la correction (COR) soit généralement positive.

6. Procédé selon l'un des revendications 1 à 5 dans lequel, on génère une alarme lorsque la différence entre la longueur maximale (Lm) et la longueur minimale (Li) est supérieure à la différence entre la tolérance maximale (Ts) et la tolérance minimale (Ti) ((Lm-Li) > (Ts-Ti)).

7. Dispositif de pose d'une nappe de renfort sur une surface de réception de forme généralement cylindrique, comprenant

- des moyens de réalisation d'une nappe de renfort (8),
- un bâti (61) supportant une surface de réception (6) rotative de forme cylindrique
- un tapis de lancement (5) disposé entre les moyens de réalisation de la nappe (8) et la surface de réception (6),
- un capteur central (52) disposé au niveau de la ligne centrale du tapis de lancement (5) et au moins deux capteurs latéraux (51, 53) disposés latéralement de part et d'autre du capteur central, et aptes à détecter le passage d'un front de nappe (F, R) au droit de chacun des dits capteurs,
- des moyens de calcul (7) adaptés pour :

  ◦ déterminer la longueur entre le front avant (F) et le font arrière (R) sur des lignes de mesure disposées au droit des capteurs,
  ◦ déterminer une valeur de correction (COR) selon l'une des revendications 1 à 6,
  ◦ piloter les déplacements respectifs de l'avance du tapis de lancement (5) et de la rotation de la surface de réception (6) en fonction de ladite valeur de correction.

8. Dispositif selon la revendication 7 dans lequel les capteurs latéraux (51, 53) sont disposés à une distance comprise entre 10 mm et 40 mm des lisières longitudinales de la nappe.


**Patentansprüche**

1. Verfahren zum Verlegen einer Verstärkungsschicht auf einer Aufnahmefläche (6) von im Allgemeinen zylindrischer Form, wobei die Schicht eine Vorderseite (F) und eine Rückseite (R) umfasst, die nach einer vollständigen Drehung der Aufnahmefläche (6) dazu bestimmt sind, Stoß an Stoß zwischen einer maximalen Toleranz (Ts) und einer minimalen Toleranz (Ti) angeordnet zu werden, die in Bezug auf eine Referenzvorderseite gemessen werden, während dessen:

   - eine Schicht mit einer gegebenen theoretischen Länge hergestellt wird,
   - die Länge zwischen der Vorderseite und der Rückseite auf einer zentralen Messlinie (Lm) und auf mindestens zwei seitlichen Messlinien (La, Lb), die quer beiderseits der zentralen Messlinie angeordnet sind, bestimmt wird,
   - die Schicht auf ein Ablaufband (5) aufgebracht wird,
   - die durchzuführende Längenkorrektur (COR) im Bereich der zentralen Messlinie bestimmt wird, damit die beiden Punkte einer Vorderseite (F) der Schicht, die den Messlängen entsprechen, deren Werte voneinander am weitesten entfernt sind (Lmax, Lmin), in gleichem Abstand zu der Referenzmittellinie angeordnet sind, die sich in einem Abstand (Tc) zur Referenzfront entsprechend dem durchschnittlichen Wert der maximalen Toleranz und der minimalen Toleranz befindet,
   - die Vorderseite der Schicht auf die Aufnahmefläche (6) aufgebracht wird,
   - der Rest der Schicht aufgebracht wird, wobei das Verhältnis der Längsverschiebung des Ablaufbandes (5) in Bezug auf die Umfangsbewegung der Aufnahmefläche (6) derart angepasst wird, dass die im Bereich der zentralen Linie verlegte Länge gleich der im Bereich der zentralen Messlinie (Lm) gemessenen Länge, korrigiert um die Längenkorrektur (COR), ist.

2. Verfahren nach Anspruch 1, bei dem der Wert der durchzuführenden Korrektor (COR) gleich der Hälfte der Summe der Werte der oberen Toleranz und der unteren Toleranz $(\dfrac{Ts + Ti}{2})$, verringert um die Hälfte der Summe der oberen Länge und der unteren Länge $(\dfrac{Lmax + Lmin}{2})$ ist.

3. Verfahren nach Anspruch 1 oder 2, bei dem die Vorderseite (F) als Referenzseite gewählt wird.

4. Verfahren nach Anspruch 1 oder 2, bei dem die Rückseite (R) als Referenzseite gewählt wird.

5. Verfahren nach einem der Ansprüche 1 bis 4, bei dem eine Schicht hergestellt wird, deren Länge im Bereich der zentralen Messlinie (Lm) im Durchschnitt kleiner als ein gegebener Abstand zum Umfang der Verlegefläche ist, so dass der Korrekturwert (COR) im Allgemeinen positiv ist.

6. Verfahren nach einem der Ansprüche 1 bis 5, bei dem ein Alarm erzeugt wird, wenn der Unterschied zwischen der maximalen Länge (Lm) und der minimalen Länge (Li) größer als der Unterschied zwischen der maximalen Toleranz (Ts) und der minimalen Toleranz (Ti) ((Lm-Li) > (Ts-Ti)) ist.

7. Vorrichtung zum Verlegen einer Verstärkungsschicht auf einer Aufnahmefläche von im Allgemeinen zylindrischer Form, umfassend:

- Mittel zur Herstellung einer Verstärkungsschicht (8),
- ein Gehäuse (61), das eine drehbare Aufnahmefläche (6) von zylindrischer Form trägt,
- ein Ablaufband (5), die zwischen den Mitteln zur Herstellung der Schicht (8) und der Aufnahmefläche (6) angeordnet ist,
- einen zentralen Sensor (52), der im Bereich der zentralen Linie des Ablaufbandes (5) angeordnet ist, und mindestens zwei seitliche Sensoren (51, 53), die seitlich beiderseits des zentralen Sensors angeordnet und geeignet sind, den Durchgang einer Vorderseite einer Schicht (F, R) im rechten Winkel zu jedem der Sensoren zu erfassen,
- Berechnungsmittel (7), die dazu vorgesehen sind:

 * die Länge zwischen der Vorderseite (F) und der Rückseite (R) auf im rechten Winkel zu den Sensoren angeordneten Messlinien zu bestimmen,
 * einen Korrekturwert (COR) nach einem der Ansprüche 1 bis 6 zu bestimmen,
 * die jeweiligen Verschiebungen der Vorschubbewegung des Ablaufbandes (5) und der Drehung der Aufnahmefläche (6) in Abhängigkeit von dem Korrekturwert zu steuern.

8. Vorrichtung nach Anspruch 7, bei der die seitlichen Sensoren (51, 53) in einem Abstand zwischen 10 mm und 40 mm zu den Längskanten der Schicht angeordnet sind.

**Claims**

1. Method of laying a reinforcing ply on a receiving surface (6) of generally cylindrical shape, said ply comprising a front edge (F) and a rear edge (R) which are intended to be butted against each other, after a complete rotation of the receiving surface (6), between a maximum tolerance (Ts) and a minimum tolerance (Ti) measured relative to a reference source, in the course of which:

- a ply having a given theoretical length is produced,
- the length between the front edge and the rear edge is determined on a central measurement line (Lm), and on at least two lateral measurement lines (La, Lb) positioned transversely one on each side of the central measurement line,
- said ply is laid on a starting belt (5),
- the length correction (COR) to be made on the central measurement line is determined so as to ensure that the two tips of an edge (F) of the ply corresponding to the measured lengths whose values are most different from each other (Lmax, Lmin) are placed at equal distances from the reference median line which is located at a distance (Tc) from the reference edge and which corresponds to the mean value of the maximum tolerance and the minimum tolerance.
- the front edge of the ply is transferred to the receiving surface (6),
- the rest of the ply is laid while the longitudinal movement of the starting belt (5) is adjusted relative to the circumferential movement of the receiving surface (6) in such a way that the length laid on the central line is equal to the length measured on said central measurement line (Lm) corrected by said length correction (COR).

2. Method according to Claim 1, in which the value of the correction (COR) to be applied is equal to half the sum of the higher tolerance and the lower tolerance ($\frac{Ts + Ti}{2}$), minus half the sum of the higher length and the lower length ($\frac{L\max + L\min}{2}$).

3. Method according to Claim 1 or 2, in which the front edge (F) is chosen as the reference edge.

4. Method according to Claim 1 or 2, in which the rear edge (R) is chosen as the reference edge.

5. Method according to any of Claims 1 to 4, in which the length, on the central measurement line (Lm), of the ply which is produced is, on average, smaller by a given amount than the circumference of the laying surface, in such a way that the value of the correction (COR) is generally positive.

6. Method according to any of Claims 1 to 5, in which an alarm is generated if the difference between the maximum length (Lm) and the minimum length (Li) is greater than the difference between the maximum tolerance (Ts) and the minimum tolerance (Ti) ((Lm-Li) > (Ts-Ti)).

7. Device for laying a reinforcing ply on a receiving surface of generally cylindrical shape, comprising:

   - means of producing a reinforcing ply (8),
   - a frame (61) supporting a rotary receiving surface (6) of cylindrical shape,
   - a starting belt (5) positioned between the ply production means (8) and the receiving surface (6),
   - a central sensor (52) positioned on the central line of the starting belt (5) and at least two lateral sensors (51, 53) positioned laterally, one on each side of the central sensor, and adapted to detect the passage of a ply edge (F, R) across each of said sensors,
   - calculating means (7) adapted to:

      ◦ determine the length between the front edge (F) and the rear edge (R) on measurement lines positioned in line with the sensors,
      ◦ determine a value of the correction (COR) according to any of Claims 1 to 6,
      ◦ control the respective movements of the advance of the starting belt (5) and the rotation of the receiving surface (6), as a function of said value of the correction.

8. Device according to Claim 7, in which the lateral sensors (51, 53) are positioned at a distance of between 10 mm and 40 mm from the longitudinal borders of the ply.

Fig 1

Fig 2

Pf

Ar

La

Ti

Ts

Af

Mr

Lm

Tc

F

R

Mm

Br

Lb

Bf

Mf

1

COR

**Fig 3**

Pf

L'a

Ti

Af

Ts

Mf

L'm

Tc

F

Lmin

Mm

R

L'b

Bf

1

**Fig 4**

**Fig 5**

**Fig 6**

**Fig 7**

**Fig 8**

**Fig 9**

**Fig 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4769104 A
- EP 0649730 A
- US 4857123 A
- US 5092946 A
- EP 1447210 A
- US 4465531 A
- WO 2010020398 A
- DE 102008021042
- US 5904788 A